# EUROPÄISCHE PATENTSCHRIFT

(11) **EP 0 531 712 B1**
(45) Veröffentlichungstag und Bekanntmachung des Hinweises auf die Patenterteilung: **17.07.1996**
(21) Anmeldenummer: 92113387.2
(22) Anmeldetag: 06.08.1992
(51) Int. Cl.: G05B 13/02, G05D 1/08, G06F 15/80, G06F 15/18

(54) **Regler, insbesondere Flugregler**
Control system, in particular a flight controller
Système de réglage, particulièrement contrôle de vol

(30) Priorität: 11.09.1991 DE 4130164
(43) Veröffentlichungstag der Anmeldung: 17.03.1993
(73) Patentinhaber: Bodenseewerk Gerätetechnik GmbH, D-88662 Überlingen (DE)
(72) Erfinder: Krogmann, Uwe, W-7770 Überlingen-Nussdorf (DE)
(74) Vertreter: Weisse, Jürgen, Dipl.-Phys. Patentanwalt

(56) Entgegenhaltungen:
- NATIONAL TELESYSTEMS CONFERENCE PROCEEDINGS, GEORGIA WORLD CONGRESS CENTER, ATLANTA, GEORGIA, USA Bd. 1, 26. März 1991, Seiten 1 - 6 A. AZIZ BHATTI 'Neural Network based control system design of an advanced fighter aircraft'
- PROCEEDINGS OF THE 1990 IEEE INTERNATIONAL CONFERENCE ON SYSTEMS, MAN, AND CYBERNETICS, SHERATON UNIVERSAL HOTEL, LOS ANGELES, CALIFORNIA, USA 4. November 1990, Seiten 29 - 31 MING-SHONG LAN 'Learning tracking controllers for unknown dynamical systems using neural networks'
- PATENT ABSTRACTS OF JAPAN vol. 15, no. 433 (P-1271)5. November 1991 & JP-A-31 79 502
- PATENT ABSTRACTS OF JAPAN vol. 14, no. 415 (P-1102)7. September 1990 & JP-A-21 61 501
- PROCEEDINGS IEEE INTERNATIONAL CONFERENCE ON NEURAL NETWORKS 1988, SHERATON HARBOR ISLAND, SAN DIEGO, CALIFORNIA, USA; 24. Juli 1988, Seiten II-587 - II- 594 RICHARD K. ELSLEY 'A Learning Architecture for Control Based on Back- propagation Neural Networks'
- IEEE TRANSACTIONS ON NEURAL NETWORKS Bd. 1, Nr. 1, März 1990, Seiten 4 - 27 K. S. NARENDRA ET AL. 'Identification and Control of Dynamical Systems Using Neural Networks'
- VDI BERICHTE NR. 897, VDI VERLAG; 3. Juni 1991, Seiten 27 - 54 H. TOLLE 'Lernende Regelungen für die Automatisierungstechnik'

## Beschreibung

Die Erfindung betrifft einen Regler, insbesondere Flugregler enthaltend
(a) ein neuronales Netz (16) das als dynamisches Prozeßmodell einer Regelstrecke ausgebildet ist, auf welches in jedem aktuellen Zeittakt
   - Vektoren (x) von Zustandsgrößen der Regelstrecke aufgeschaltet sind, die dem aktuellen Zeittakte (k) und vorhergehenden Zeittakten (k-1, k-2, ..) zugeordnet sind, sowie
   - Vektoren (u) von auf die Regelstrecke einwirkenden Stellgrößen, die dem aktuellen Zeittakt (k) und vorherigen Zeittakten zugeordnet sind, und
(b) einen Optimierer.

Bei bekannten Reglern werden Zustandsgrößen bestimmt, die man zu einem Vektor zusammenfassen kann. Es sind verschiedene Stellgrößen vorhanden, die ebenfalls zu einem Vektor zusammengefaßt werden können. Jede dieser Zustandsgrößen ist auf der verschiedenen Stellgrößen mit geeigneten Faktoren aufgeschaltet.

Diese bekannten Verfahren gehen von einem linearen Modell der Regelstrecke aus. Regelstrecken sind jedoch häufig stark nichtlinear. Beispiele für solche stark nichtlinearen Regelstrecken sind Flugzeuge. Flugregler können daher häufig nicht optimal an das dynamische Verhalten des zu regelnden Flugzeugs angepaßt werden.

Aus der Druckschrift IEEE TRANS. NEURAL NETWORKS, Bd 1, Nr.l, 3/1990, Seiten 4-27; K.S. NARENDA et al "Identification and control of dynamical systems using neural networks" ist ein Regelkreis bekannt, bei dem neuronale Netze eingesetzt werden. Hier wird das neuronale Netz als Steuereinheit verwendet.

Die Druckschrift PROC. 1999 IEEE INTERNATIONAL CONFERENCE SYSTEMS, MAN, CYBERNETICS, LOS ANGELES USA, 4/11/1990, Seiten 29-31; M.S. LAN "Learning tracking controller for unknown dynamical systems using neural networks" beschreibt die Struktur eines Regelkreises, wie er in der vorherigen Druckschrift von NARENDA et al. dargestellt ist. Auch hier erfolgt eine Regelung über eine Steuereinheit, die als neuronales Netz ausgebildet ist.

Aus der Druckschrift VDI Berichte Nr.897, VDI Verlag, 3/6/1991, Seiten 27-54; H. Tolle "Lernende Reglung für die Automatisierungstechnik", ist ein Regelkreis "LERNAS" mit prädikativem Prozeßmodell bekannt. Der Regelkreis "LERNAS" lernt während der Regelung und paßt sich auch nichtlinearen Regelstrecken an. Solche Regelkreise sind allerdings für die Flugregelung nicht vernünftig einsetzbar, da das prädikative Prozeßmodell nur schrittweise aufgebaut wird, d.h., daß das Lernen während der Regelung erfolgt. Während der Flugphase wäre ein solcher Regler nicht schnell genug. Ein Flugzeug mit einem diesem Regelkreis wäre längst abgestürzt, wenn es erst lernen muß mit einer bestimmten Situation umzugehen. Solche Regelkreise eignen sich deswegen für dynamische aber langsamer ablaufende Prozesse, wie sie z.B. in der Chemie vorkommen.

Der Erfindung liegt die Aufgabe zugrunde, einen schnellen Regler so auszubilden, daß er optimal an Regelstrecken auch mit stark nichtlinearem dynamischen Verhalten angepaßt ist.

Erfindungsgemäß wird die Aufgabe dadurch gelöst, daß
(c) das neuronale Netz
   - fest vorgegebene Gewichte aufweist, die durch vorheriges Trainieren dem dynamischen Modell der Regelstrecke entsprechen,
   - Schätzwerte (x̂) der Zustandsvektoren liefert, die nach einem dynamischen Modell für eine Mehrzahl von zukünftigen Zeittakten (k+1,k+2,...) zu erwarten sind,
(d) Mittel zur Bildung der Differenz der besagten Zustandsvektoren für die zukünftigen Zeittakte und der Sollwerte dieser zukünftigen Zustandsvektoren,
(e) der Optimierer als neuronales Netz ausgebildet ist, das fest vorgegebene Gewichte aufweist, die durch vorheriges Trainieren dem inversen dynamischen Modell der Regelstrecke entsprechen
   - auf das die besagten Differenzen aufschaltbar sind und
   - das Vektoren von Stellgrößen für zukünftige Zeittakte liefert,
(f) Mittel zum entsprechend verzögerten Aufschalten eines der zukünftigen Zeittakte vorgesehenen Vektoren (u(k+1)) von Stellgrößen als aktuellen Vektor von Stellgrößen auf die Regelstrecke.

Nach der Erfindung wird ein neuronales Netz zur Darstellung eines Modells der Regelstrecke vorgesehen. Dieses neuronale Netz wird trainiert, so daß es das dynamische verhalten der Regelstrecke, also beispieisweise eines Flugzeuges, richtig wiedergibt. Dabei ist vorgesehen, daß das neuronale Netz als Eingangsgrößen nicht nur den aktuellen Vektor der Zustandsgrößen erhält. An den Eingängen des neuronalen Netzes liegen außerdem die in den L vorhergehenden Zeittakten bestimmten Vektoren der Zustandsgrößen. Außerdem liegen an Eingängen des neuronalen Netzes die in den L vorhergehenden Zeittakten auf die Regelstrecke aufgeschalteten Vektoren von Stellgrößen. Vorteilhaft sind auf das neuronale Netz noch die Stellgrößen aufgeschaltet, die in den auf den aktuellen Zeittakt folgenden N Zeittakten, also in Zukunft, auf die Regelstrecke aufgeschaltet werden sollen. Aus diesen Größen liefert das neuronale Netz durch eine Art Extrapolation Vorhersagewerte für die N Vektoren der Zustandsgrößen, die in den auf den aktuellen Zeittakt folgenden N zeittakten erhalten werden. Diese Vorhersagewerte werden verglichen mit den für diese

Zeittakte vorgesehenen oder kommandierten Zustandsgrößen. Es werden die Differenzen der kom Vektoren der zustandsgrößen und der Vorhersagewerte Vektoren gebildet.

Diese Differenzen sind auf den Optimierer geschaltet. Der ist auch ein trainiertes, neuronales Netz. Dieses neuronale Netz stellt das inverse Modell der Regelstrecke dar: An den Eingängen liegen Zustandsgrößen, an den Ausgängen ergeben sich zugehörige Stellgrößen. Es ist extrem schwierig, zu einer Übertragungsfunktion der Regelstrecke eine dazu inverse Ubertragungsfunktion zu berechnen. Das gilt in besonderem Maße, wenn die Regelstrecke und ihr Modell nichtlineares dynamisches Verhalten zeigen. Es hat sich aber gezeigt, daß unter Verwendung neuronaler Netze, die geeignet trainiert werden, auch eine Regelstrecke mit nichtlinearem dynamischen Verhalten als Modell dargestellt werden kann, und auch ein dazu inverses Modell praktisch darstellbar ist.

Von den an den Ausgängen des Optimierers erscheinenden Vektoren von Stellgrößen liefert einer, z,B. der Vektor, welcher dem auf den aktuellen Zeittakt folgenden Zeittakt zueordnet ist, den Vektor der Stellgrößen, die auf die Regelstrecke geschaltet sind. Da der Optimierer die in den zukünftigen Zeittakten zu erwartenden Stellgrößen liefert, wird der Vektor vor dem Aufschalten jeweils um z.B. einen Zeittakt verzögert.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: ist ein schematisches Blockdiagramm eines mit neuronalen Netzen aufgebauten Flugregelkreises.
- Fig.2: ist eine detailliertere Blockdarstellung des Flugregelkreises von Fig.1.
- Fig.3: veranschaulicht das Trainieren des neuronalen Netzes, das das dynamische Modell der Regelstrecke darstellt.
- Fig.4: veranschaulicht das Trainieren des neuronalen Netzes, das den "Optimierer" in dem Regler von Fig.2 darstellt.

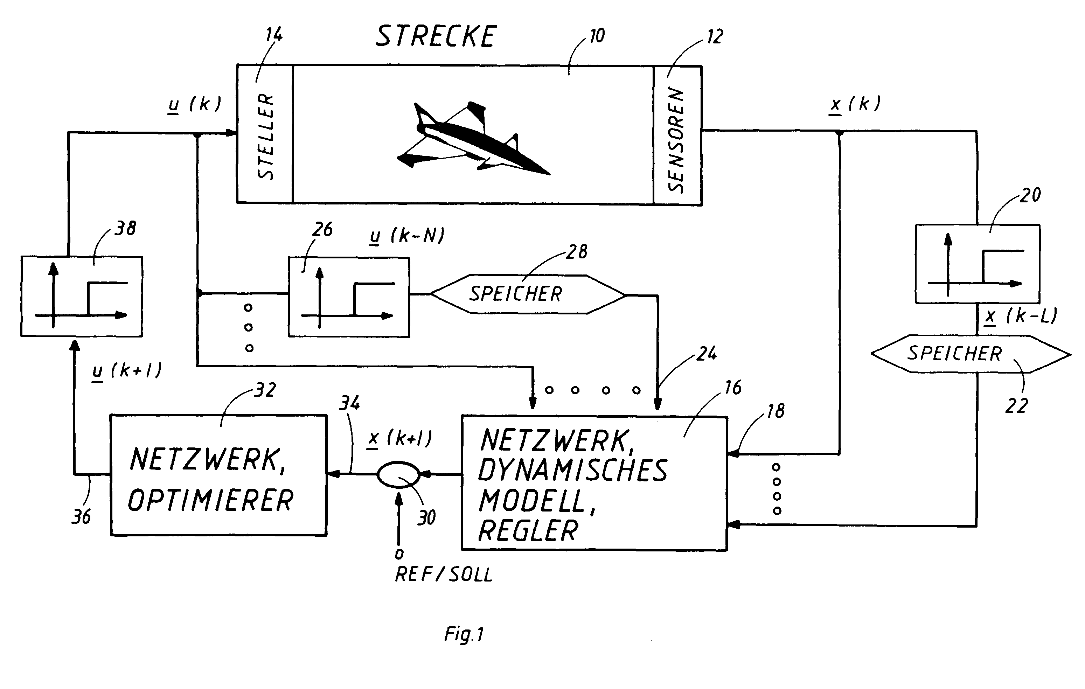

In Fig.1 ist mit 10 eine Regelstrecke bezeichnet. Das kann vorzugsweise, wie in Fig.1 angedeutet ist, ein Flugzeug sein. Die Regelstrecke liefert Zustandsgrößen, die von Sensoren 12 geliefert werden. Solche Zustandsgrößen können beispielsweise Winkelgeschwindigkeiten, Beschleunigungen, Lagewinkel, Anstellwinkel, Fluggeschwindigkeit, Schub etc. sein. Die Zustandsgrößen sind in Fig.1 zu einem Vektor x(k) der Zustandsgrößen zusammengefaßt. Die Signale werden mit einem Zeittakt abgetastet. Mit "k" ist die laufende Nummer des aktuellen Zeittaktes bezeichnet. Die Regelstrecke 10 erhält Stellsignale an Stellern 14. Diese Stellsignale sind zu einem Vektor u(k) zusammengefaßt. Die Stellsignale können Höhen-, Quer- und Seitenruderwinkel, Schub, Klappenwinkel etc. sein. Auch die Stellsignale u werden mit dem Zeittakt aufgeschaltet.

Der Regler enthält ein neuronales Netz 16, welches ein dynamisches Model der Regelstrecke 10 darstellt. Das Netz 16 wird trainiert, daß es das dynamische Verhalten der Regelstrecke 10 genau wiedergibt, auch wenn die Regelstrecke 10 stark nichtlinear ist. Es läßt sich praktisch zeigen, daß dies möglich ist.

Auf Eingänge 18 des Netzes 16 ist nicht nur der aktuelle Vektor x(k) der im Zeittakt k von den Sensoren 12 abgetasteten Zustandsgrößen aufgeschaltet sondern auch die Vektoren von Zustandsgrößen, die den vorhergehenden Zeittakten k-1, k-2,...k-L zugeordnet sind. Das sind also die Vektoren der Zustandsgrößen, die in diesen vorhergehenden Zeittakten von den Sensoren 12 geliefert und abgetastet wurden. Zu diesem Zweck werden die abgetasteten Zustandsgrößen durch Verzögerungsglieder 20 um 1, 2, .... bzw. L Zeittakte verzögert und dann jeweils für einen Zeittakt in einem Speicher 22 gespeichert.

Auf Eingänge 24 des neuronalen Netzes sind weiterhin der aktuelle Vektor u (k) der Stellgrößen aufgeschaltet, die im Zeittakt k an den Stellern 14 anliegen, sowie die Stellgrößen, die früheren Zeittakten k-1, k-2, ....k-N zugeordnet sind und in diesen Zeittakten an den Stellern 14 anlagen. Zu diesem Zweck werden die an den Stellern 14 anliegenden Stellgrößen parallel dazu in Verzögerungsgliedern 26 um ein oder mehrere Taktintervalle verzögert und dann jeweils für einen Zeittakt in einem Speicher 28 gespeichert.

Das neuronale Netz 16 liefert Schätzwerte oder Voraussagewerte für die unter Berücksichtigung der Eigenschaften der Regelstrecke 10 in dem nachfolgenden Zeittakt (k+1), also in der Zukunft, zu erwartenden Zustandsgrößen. Das ist eine Art Extrapolation. Die so erhaltenen Schätzwerte werden mit den Sollwerten oder Führungsgrößen der Zustandsgrößen verglichen. In einem "Summationspunkt" 30 wird zu diesem Zweck die Differenz der Schätzwerte x(k+1) und der Sollwerte gebildet.

Die Differenz beaufschlagt einen ebenfalls als neuronales Netz ausgebildeten Optimierer 32. Der Optimierer 32 ist so trainiert, daß er eine zur "Übertragungsfunktion" der Regelstrecke 10 inverse Übertragungsfunktion besitzt: Zu einer an einem Eingang 34 eingegebenen Differenz der Vektoren von Zustandsgrößen und Führungsgrößen liefert er an einem Ausgang 36 den zugehörigen Vektor der Stellgrößen u(k+1), der an der Regelstrecke gerade diese Abweichung der Zustandsgrößen von den Führungsgrößen kompensiert.

Dieser Vektor u(k+1) enthält in jedem laufenden Zeittakt k die Stellgrößen, die im nächsten Zeittakt k+1 auf die Regelstrecke aufgeschaltet werden soll. Dieser Vektor von Stellgrößen wird daher vor der Aufschaltung auf die Steller 14 der Regelstrecke 10 durch ein Verzögerungsglied 38 noch um einen Zeittakt verzögert. Auf die Steller 14 ist dann der Vektor u(k) aufgeschaltet.

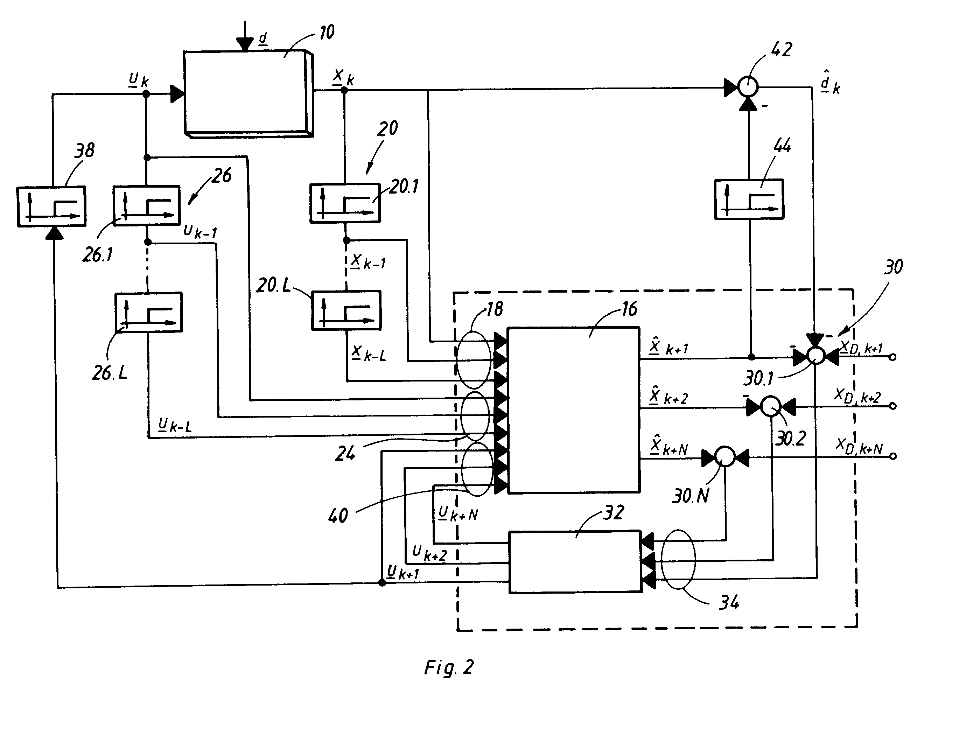

In Fig.2 ist der Flugregelkreis von Fig.1 noch etwas detaillierter dargestellt. Entsprechende Teile tragen die gleichen Bezugszeichen wie in Fig.1.

Der Vektor der Zustandsgrößen x(k), der von den Sensoren 12 geliefert wird und den "Ausgang" der Regelstrecke 10 bildet, wird durch ein erstes Verzögerungsglied 20.1 um einen Zeittakt verzögert. Wenn x(k) der aktuelle Vektor der Zustandsgrößen ist, dann liefert das Verzögerungsglied den Vektor x(k-1) der Zustandsgrößen, die im vorhergehenden Zeittakt bestimmt und abgetastet worden waren. Eine Folge weiterer (nicht dargestellte) Verzögerungsglieder, auf welche der Ausgang des jeweils in der Folge voranstehenden Verzögerungsgliedes aufgeschaltet ist und die jedes eine Verzögerung um einen weiteren Zeittakt bewirken, liefern die um jeweils einen weiteren Zeittakt verzögerten Vektoren der Zustandsgrößen x(k-2), x(k-3).., bis zu dem Verzögerungsglied 20.L, das den Vektor der Zustandsgrößen x(k-L) liefert. Die so erhaltenen Vektoren der Zustandsgrößen x(k), x(k-1)...x(k-1) sind auf Eingänge 18 des neuronalen Netzes 16 geschaltet.

Auf die Steller 14 der Regelstrecke 10 ist im aktuellen Zeittakt der Vektor der Stellgrößen u(k) aufgeschaltet. Dieser Vektor bildet den "Eingang" der Regelstrecke. Ähnlich wie bei den Zustandsgrößen werden durch Verzögerungsglieder 26.1 bis 26.L im Zeittakt k außer dem aktuellen Vektor u(k) der Stellgrößen auch die Vektoren u(k-1), u(k-2)... u(k-L) der Stellgrößen erzeugt, die in den vorhergegangenen Zeittakten auf die Steller 14 aufgeschaltet worden waren. Auch diese Vektoren der Stellgrößen u(k), u(k-1)...u(k-L) werden auf Eingänge 24 des neuronalen Netzes 16 aufgeschaltet.

Außerdem erhält das neuronale Netz 16 an Eingängen 40 Vektoren von Stellgrößen u(k+1),u(k+2),...u(k+N), die in Zukunft in den nächstfolgenden N Zeittakten auf die Steller 14 der Regelstrecke 10 aufgeschaltet werden sollen. Diese Stellgrößen werden von dem Optimierer 32 geliefert.

Aus den eingegebenen Vektoren von Zustands- und Stellgrößen liefert das neuronale Netz 16 Schätzwerte oder Vorhersagewerte für die Zustandsgrößen, die in den N nächstfolgenden Zeittakten k+1, k+2,..k+N zu erwarten sind. Diese Vorhersagewerte x(k+1), x(k+2)...x(k+N) werden in Summierpunkten 30.1, 30.2,.. 30.N mit den Sollwerten oder Führungsgrößen x_{D}(k+1), x_{D}(k+2)...x_{D}(k+N) dieser Zustandsgrößen für die zukünftigen Zeittakte verglichen. Es werden die Differenzen der Vorhersagewerte und der Führungsgrößen gebildet. Diese Differenzen sind auf Eingänge 34 des Optimierers geschaltet.

Von den Ausgängen des Optimierers 32, die den zukünftig aufzuschaltenden Vektoren der Stellgrößen u(k+1)...u(k+N) entsprechen, wird der Vektor u(k+1) durch das Verzögerungsglied 38 um einen Zeittakt verzögert und als Vektor von Stellgrößen u(k) auf die Steller 14 der Regelstrecke 10 aufgeschaltet. Außerdem liegt, wie gesagt, der Vektor u(k+1) sowie die Vektoren u(k+2)..u(k+N) an Eingängen 40 des neuronalen Netzes 16.

Mit d ist eine Störung bezeichnet, die auf die Regelstrecke 10 wirkt. Die Störung ist ein Vektor der Störeinflüsse auf die verschiedenen Zustandsgrößen. Der Regler von Fig.2 sieht vor, daß ein Schätzwert d(k) dieser Störung d für den jewiligen Zeittakt k gebildet und als Korrektur auf den Summierpunkt 30.1 aufgeschaltet wird. Zu diesem Zweck wird in einem Summierpunkt 42 die Differenz des tatsächlich im Zeittakt k von den Sensoren 12 gelieferten und abgetasteten Vektors x(k) der Zustandsgrößen und des für diesen Zeittakt k vorhergesagten Vektors gebildet. Dieser für den Zeittakt k vorhergesagte Vektor wird dadurch erhalten, daß jeweils der Vektor x(k+1), der von dem neuronalen Netz 16 geliefert wird, durch ein Verzögerungsglied 44 um einen Zeittakt verzögert wird. Es wird dabei angenommen, daß die Abweichung von gemessenem und vorhergesagtem Vektor auf eine Störung d zurückzuführen ist und daß diese Störung auch noch während des nächstfolgenden Zeittaktes k+1 andauern wird. Daher wird die im Summierpunkt 30.1 gebildete Differenz mit der im Summierpunkt 42 gebildeten Differenz d(k) korrigiert.

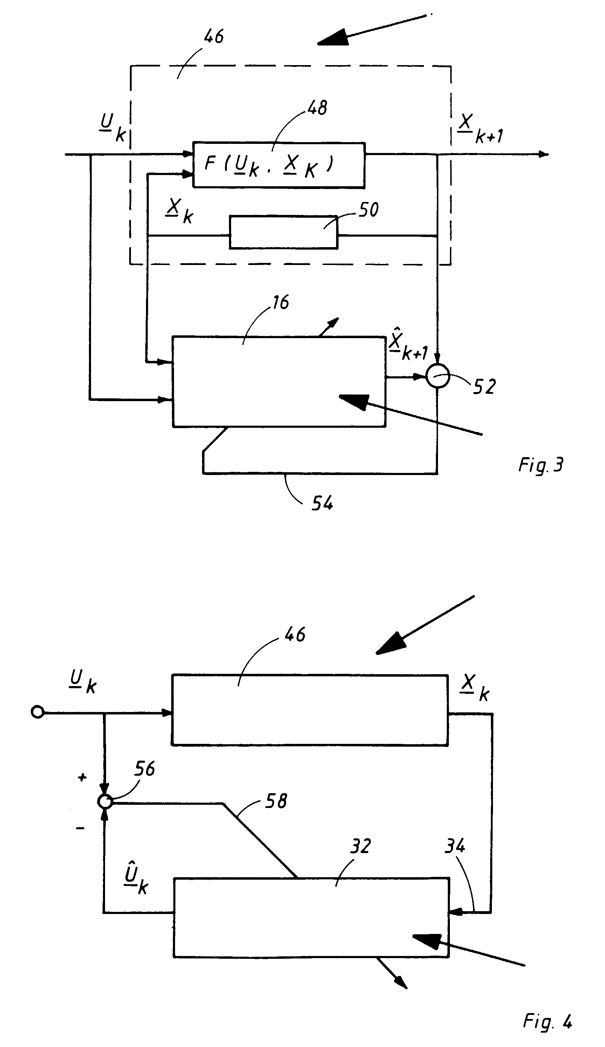

In Fig.3 ist das Trainieren des neuronalen Netzes zur Darstellung eines dynamischen Modells der Regelstrecke 10 schematisch dargestellt.

Mit 46 ist eine Einrichtung bezeichnet, die aus dem Vektor u(k) der Stellgrößen im Zeittakt k den Vektor x(k+1) der Zustandsgrößen im Zeittakt k+1 liefert. Man kann sich vorstellen, daß der Vektor x(k+1) sich aus dem Vektor u(k) der Stellgrößen und dem Vektor x(k) der Zustandsgrößen im Zeittakt k nach einer "Übertragungsfunktion F(u(k),x(k)) ergibt. Diese ist durch Block 48 dargestellt. Der Vektor x(k) ergibt sich aus dem am Ausgang des Blocks 48 erscheinenden Vektor x(k+1) durch Verzögerung um einen Zeittakt mittels eines Verzögerungsgliedes 50. Die Einrichtung 46 kann die tatsächlich physikalisch vorhandene Regelstrecke 10 sein. Die Einrichtung 46 kann ein umfassendes, nichtlineares Modell der Regelstrecke sein, das auf einem Rechner simuliert wird. Die Einrichtung 46 kann aber auch durch Meßdatensätze für u(k), x(k) und x(k+1) dargestellt werden.

Das neuronale Netz 16 erhält nun von der Einrichtung 46 als Eingänge die Vektoren u(k) und x(k). Das neuronale Netz sollte dann den Vektor x(k+1) liefern. Zunächst wird der tatsächlich erhaltene Vektor x(k+1) von dem Vektor x(k+1) an der Einrichtung 46 relativ stark abweichen. In einem Summierpunkt 52 wird die Differenz dieser Vektoren gebildet. In einem durch die Schleife 54 symbolisierten "Lernschritt" werden die Gewichte in dem neuronalen Netz 16 nach einem geeigneten Algorithmus in Abhängigkeit von der im Summierpunkt 52 gebildeten Differenz variiert. Das wird dann mit weiteren Vektoren von Stell- und Zustandsgrößen in einem Zeittakt und dem Vektor der Zustandsgrößen im nächstfolgenden Zeittakt wiederholt. In einer Folge von derartigen Lernschritten "lernt" das neuronale Netz die richtige Bildung des Vektors x(k+1) aus den Vektoren u(k) und x(k). Das neuronale Netz liefert dann im trainierten Zustand zu jedem u(k) und x(k) einen Vorhersagewert des Vektors x(k+1) der im nächsten Zeittakt zu erwartenden Zustandsgrößen.

Fig.4 veranschaulicht das Trainieren des Optimierers. Der Optimierer soll eine zur "Übertragungsfunktion" F der Regelstrecke inverse Übertragungsfunktion F⁻¹ haben. Mit 46 ist wieder eine die Regelstrecke 10 darstellende Einrichtung bezeichnet entsprechend der Einrichtung 46 von Fig.3. Die Einrichtung 46 erhält im Zeittakt k den Vektor u(k) der Stellgrößen und liefert an seinem Ausgang den Vektor x(k) der Zustandsgrößen für diesen Zeittakt. Der Vektor x(k) der Zustandsgrößen am Ausgang der Einrichtung 46 ist auf den Eingang 34 des neuronalen Netzes 32 geschaltet. Der Ausgang des neuronalen Netzes 32 sollte ein Schätzwert u(k) für den Vektor der Stellgrößen im Zeittakt k sein. Das wird zunächst nicht der Fall sein. In einem Summierpunkt 56 wird die Differenz des Vektors u(k) vom Eingang der Einrichtung 46 und des Schätzwertes u(k) von dem neuronalen Netz 32 gebildet. Es werden nun, ähnlich wie bei der Anordnung von Fig.4, in aufeinanderfolgenden Lernschritten mit verschiedenen Vektoren u(k) und x(k) die Gewichte des neuronalen Netzes 32 in Abhängigkeit von der Differenz so verändert, daß das neuronale Netz schließlich für jeden Vektor x(k) mit hinreichender Genauigkeit den zugehörigen Schätzwert des Vektors u(k) der Stellgrößen liefert. Diese Veränderung der Gewichte ist durch die Schleife 58 in Fig.4 angedeutet.

Es wird auf diese Weise ein Optimierer erhalten, der eine zur Regelstrecke inverse Dynamik aufweist. Dieser wird dann in der in Fig.1 und 2 dargestellten Weise eingesetzt.

## Patentansprüche

1. Regler, insbesondere Flugregler enthaltend
(a) ein neuronales Netz (16), das als dynamisches Prozeßmodell einer Regelstrecke (10) ausgebildet ist, auf welches in jedem aktuellen Zeittakt
- Vektoren (x) von Zustandsgrößen der Regelstrecke (10) aufgeschaltet sind, die dem aktuellen Zeittakte (k) und vorhergehenden Zeittakten (k-1,k-2,..) zugeordnet sind, sowie
- Vektoren (u) von auf die Regelstrecke einwirkenden Stellgrößen, die dem aktuellen Zeittakt (k) und vorhergehenden Zeittakten zugeordnet sind, und
(b) einen Optimierer (32),
**dadurch gekennzeichnet, daß**
(c) das neuronale Netz (16)
- fest vorgegebene Gewichte aufweist, die durch vorheriges Trainieren dem dynamischen Modell der Regelstrecke (10) entsprechen,
- Schätzwerte (x̂) der Zustandsvektoren liefert, die nach einem dynamischen Modell für eine Mehrzahl von zukünftigen Zeittakten (k+1,k+2,...) zu erwarten sind,
(d) Mittel (30) zur Bildung der Differenz der besagten Zustandsvektoren für die zukünftigen Zeittakte und der Sollwerte dieser zukünftigen Zustandsvektoren,
(e) der Optimierer (32) als neuronales Netz ausgebildet ist, das fest vorgegebene Gewichte aufweist, die durch vorheriges Trainieren dem inversen dynamischen Modell der Regelstrecke (10) entsprechen
- auf das die besagten Differenzen aufschaltbar sind und
- das vektoren von Stellgrößen für zukünftige Zeittakte liefert,
(f) Mittel (38) zum entsprechend verzögerten Aufschalten eines der zukünftigen Zeittakte vorgesehenen Vektoren (u(k+1)) von Stellgrößen als aktuellen Vektor von Stellgrößen auf die Regelstrecke (10).

2. Regler nach Anspruch 1, dadurch gekennzeichnet, daß auf Eingänge (40) des neuronalen Netzes (16) Vektoren (u(k+1),u(k+2)...u(k+N)) von Stellgrößen aufgeschaltet sind, die für zukünftige Zeittakte vorgesehen sind,

3. Regler nach Anspruch 1 oder 2, **dadurch gekennzeichnet**, **daß**
(a) in einem Summierpunkt (42) die Differenz des Vektors (x(k)) der aktuellen zustandsgrößen, die von den Sensoren geliefert werden, und des von dem neuronalen Netz (16) für den nächstfolgenden Zeittakt gelieferten, durch ein Verzögerungsglied (44) um einen Zeittakt verzögerten Schätzwertes des vektors (x(k+1) der Zustandsgrößen gebildet wird und
(b) diese Differenz als Schätzwert (d(k)) einer an der Regelstrecke (10) wirksamen Störung (d) auf einen Summierpunkt (30.1) aufgeschaltet ist, in welchem die Differenz des Schätzwertes des Zustandsvektors x(k+1) für den nächstfolgenden Zeittakt (k+1) und des Sollwertes (x_{D}(k+1)) dieses zukünftigen Zustandsvektors gebildet wird.

## Claims

1. Controller, in particular flight controller, comprising
(a) a neural net (16) which is designed as a dynamic process model of a controlled system, to which in each actual clock unterval (k)
- vectors (x) of state variables of the controlled system (10) are applied which are associated with clock intervals (k-1, k-2...) preceding the actual clock interval (k) as well as
- vectors (u) of manipulated variables effective on the controlled system which are associated with the actual clock interval and preceding clock intervals, and
(b) an optimizer (32)
**characterized in that**
(c) the neural net (16)
- has fixedly predetermined weights which, by previous training, represents the dynamic model of the controlled system (10)
- provides estimated values (x) of the state vectors which are to be expected, in accordance with a dynamic model, for a plurality of future clock intervals (k+1,k+2..),
(d) means are provided (30) for forming the difference of said state vectors for the future clock intervals and the commanded values of these state vectors,
(e) the optimizer (32) is a neural network which has fixedly predetermined weights, which by previous training represent the inverse dynamic model of the controlled system (10)
- to which said differences are applied and
- which provides vectors of manipulated variables for future clock intervals,
(f) means (38) are provided for applying one of the vectors (u(k+1)) of manipulated variables with appropriate delay as actual vector of manipulated variables to the controlled system (10).

2. Controller as claimed in claim 1, **characterized in that** vectors (u(k+1),u(k+2)...u(k+N)) of manipulated variables, which are provided for future clock intervals, are applied to the inputs (40) of the neural net (16).

3. Controller as claimed in claim 1 or 2, **characterized in** that
(a) the difference of the vector (x(k)) of the actual state variables, which are provided by the sensors, and of estimated value of the vector (x(k+1))of the state variables provided by the neural net (16) for the next-following clock interval and delayed by one clock interval by a delay element (44) is formed at a summing point (42), and
(b) this difference is applied to a summing point (30.1) as an estimated value (d(k)) of a disturbance (d) effective at the the controlled system, this summing point serving to form the difference of the estimated value of the state vector x(k+1) for the next-following clock interval (k+1) and of the commanded value (x_{D}(k+1)) of this future state vector.

## Revendications

1. Régulateur, notamment régulateur de vol, comprenant
(a) un réseau neuronal (16) développé en modèle dynamique de processus d'un système réglé (10) et auquel dans chaque période actuelle
- des vecteurs (x) de variables d'état du système réglé (10) sont appliqués, variables associées à la période actuelle (k) et aux périodes précédentes (k-1, k-2 ...) ainsi que
- des vecteurs (u) de variables d'ajustage influant sur le système réglé sont appliqués, variables associées à la période actuelle (k) et aux périodes précédentes, et
(b) un optimaliseur,
**caractérisé par le fait que**
(c) le réseau neuronal (16)
- présente des poids fixement prédéfinis qui correspondent par un entraînement précédent au modèle dynamique du système réglé (10),
- livre des valeurs estimatives (X̂) des vecteurs d'état auxquelles on s'attend d'après un modèle dynamique pour plusieurs périodes ultérieures (k+1, k+2, ...),
(d) des moyens (30) sont formés, moyens destinés à former la différence desdits vecteurs d'état pour les périodes ultérieures et les valeurs de consigne de ces vecteurs ultérieurs d'état,
(e) l'optimaliseur (32) est développé en réseau neuronal qui présente des poids fixement prédéfinis qui correspondent par un entraînement précédent au modèle dynamique inverse du système réglé (10),
- modèle sur lequel lesdites différences sont suceptibles d'être appliquées et
- modèle qui livre des vecteurs de variables d'ajustage pour des périodes ultérieures,
(f) des moyens (38) sont prévus, moyens destinés à appliquer, de façon conformément retardée, au système réglé (10) l'une des périodes ultérieures à des vecteurs prévus (u(k+1)) de variables d'ajustage en tant que vecteur actuel de variables d'ajustage.

2. Régulateur selon la revendication 1, **caractérisé par le fait que** des vecteurs (u(k+1), u(k+2) ... u(k+N)) de variables d'ajustage prévues pour des périodes ultérieures sont appliqués à des entrées (40) du réseau neuronal (16).

3. Réguleteur selon la revendication 1 ou 2, **caractérisé par le fait que**
(a) la différence du vecteur (x(k)) des variables actuelles d'état livrées par les capteurs et de la valeur estimative du vecteur (x(k+1)) des variables dètat retardée d'une période par un membre de retardement (44) et livrée par le réseau neuronal (16) pour la période suivant juste après est formée au point de totalisation (42) et
(b) cette différence en qualité de valeur estimative (d(k)) d'une perturbation (d) agissant au système réglé (10) est appliquée à un point de totalisation (30.1) auquel la différence de la valeur estimative du vecteur d'état x(k+1) pour la période suivant juste après (k+1) et de la valeur de consigne (Xₚ(k+1)) de ce vecteur ultérieur d'état est formée.
